# EUROPÄISCHE PATENTSCHRIFT

(11) **EP 2 625 822 B1**
(45) Veröffentlichungstag und Bekanntmachung des Hinweises auf die Patenterteilung: **03.09.2014**
(21) Anmeldenummer: 11796694.5
(22) Anmeldetag: 13.12.2011
(51) Int. Cl.: H04L 12/24, H04L 29/08, H04L 12/28

(54) **VERFAHREN ZUR KONFIGURATION EINES ODER MEHRERER GERÄTE IN EINEM ETHERNET-BASIERTEN KOMMUNIKATIONSNETZ**
METHOD FOR CONFIGURING ONE OR MORE DEVICES IN AN ETHERNET-BASED COMMUNICATION NETWORK
PROCÉDÉ POUR CONFIGURER UN OU PLUSIEURS APPAREILS DANS UN RÉSEAU DE COMMUNICATION BASÉ SUR ETHERNET

(30) Priorität: 17.12.2010 DE 102010063437
(43) Veröffentlichungstag der Anmeldung: 14.08.2013
(73) Patentinhaber: Siemens Aktiengesellschaft, 80333 München (DE)
(72) Erfinder: HUTH, Hans-Peter, 80638 München (DE); ZIRKLER, Andreas, 81671 München (DE)
(86) Internationale Anmeldenummer: PCT/EP2011/072611
(87) Internationale Veröffentlichungsnummer: WO 2012/080251

(56) Entgegenhaltungen:
- US-A1- 2003 018 757
- US-A1- 2005 114 474
- US-A1- 2009 232 028

## Beschreibung

Verfahren zur Konfiguration eines oder mehrerer Geräte in einem Ethernet-basierten Kommunikationsnetz.

Die Erfindung betrifft ein Verfahren zur Konfiguration eines oder mehrerer Geräte in einem Ethernet-basierten Kommunikationsnetz aus einer Vielzahl von Ethernet-fähigen Geräten sowie ein entsprechendes Kommunikationsnetz.

Ethernet-basierte Kommunikationsnetze werden in einer Vielzahl von Anwendungsgebieten zum Austausch von Daten eingesetzt. Das Ethernet-Protokoll betrifft dabei die Datenübertragung auf der Schicht 1 und Schicht 2 des OSI-Referenzmodells und wird in der IEEE-Norm 802.3 sowie IEEE 802.1 und IEEE 802.2 spezifiziert. Ein Anwendungsbereich ist die Verwendung von Ethernet-basierten Kommunikationsnetzen in Automatisierungssystemen, um über das Kommunikationsnetz die Durchführung eines entsprechenden Automatisierungsverfahrens geeignet zu steuern. In diesem Fall umfassen die einzelnen Geräte des Kommunikationsnetzes unter anderem entsprechende Feldgeräte, wie z.B. Aktoren oder Sensoren, um Funktionen im Rahmen des automatisierten Verfahrens durchzuführen.

Oftmals werden in einem Ethernet-basierten Kommunikationsnetz einzelnen Geräten entsprechende Konfigurationsdaten zugeordnet, auf deren Basis dann das entsprechende Gerät konfiguriert wird. Dabei ist in bestimmten Anwendungsfällen im Rahmen der Konfiguration auch zu berücksichtigen, an welchem Installationsort das Gerät im Kommunikationsnetz eingebunden ist. In einem Kommunikationsnetz für ein Automatisierungssystem kann beispielsweise der Fall auftreten, dass mehrere baugleiche Geräte verwendet werden, welche jedoch je nachdem, an welchem Ort sie in der Automatisierungsanlage installiert sind, unterschiedlich betrieben werden. Herkömmlicherweise muss dabei manuell, z.B. durch einen Servicetechniker, ermittelt werden, an welchem Ort in der Anlage ein bestimmtes Gerät eines bestimmten Gerätetyps installiert ist. Anschließend muss das Gerät wiederum manuell unter Berücksichtigung seines Installationsorts konfiguriert werden. Manuell bezeichnet hier einen Vorgang der von einem Menschen angestoßen und durchgeführt wird, dies kann aber durchaus mit Hilfe von Software-Tools geschehen.

Die Druckschrift US 2009/0232028 A1 offenbart ein Verfahren zur Konfiguration eines Geräts in einem Netzwerk, bei dem eine automatische Konfigurationseinheit neue, zum Netzwerk hinzukommende Geräte sowie deren Ort detektiert und basierend auf diesen Informationen die neuen Gerät konfiguriert.

In dem Dokument US 2005/0114474 A1 ist die automatische Konfiguration von Netzgeräten über eine Netz-Verwaltungs-Software basierend auf Regeln beschrieben, welche von dem Ort des entsprechenden Netzgeräts im Netzwerk abhängen.

Aufgabe der Erfindung ist es, ein Verfahren zur Konfiguration eines oder mehrerer Geräte in einem Ethernet-basierten Kommunikationsnetz zu schaffen, mit dem auf einfache Weise eine ortsabhängige automatische Konfiguration der Geräte ermöglicht wird.

Diese Aufgabe wird durch das Verfahren gemäß Patentanspruch 1 bzw. das Kommunikationsnetz gemäß Patentanspruch 11 gelöst. Weiterbildungen der Erfindung sind in den abhängigen Ansprüchen definiert.

In dem erfindungsgemäßen Verfahren wird für ein jeweiliges zu konfigurierendes Gerät, welches einem Gerätetyp zugeordnet ist, dessen topologische Position in dem Kommunikationsnetz ermittelt. Der Begriff der topologischen Position ist hier und im Folgenden weit zu verstehen und spezifiziert eine Information, welche im Rahmen der Topologie des Kommunikationsnetzes den Ort des Geräts in diesem Netz, z.B. über die Spezifikation von Nachbargeräten im Netz und das die Geräte verbindende Kabel, festlegt. Anschließend werden an das jeweilige Gerät seinem Gerätetyp und seiner ermittelten topologischen Position entsprechende Konfigurationsdaten aus einer Datenbank übermittelt, wobei die Datenbank eine Vielzahl von Konfigurationsdaten für einen oder mehrere Gerätetypen und verschiedene topologische Positionen des oder der Gerätetypen enthält. Somit sind in der Datenbank in Abhängigkeit von sowohl dem Gerätetyp als auch der topologischen Position geeignete Konfigurationsdaten hinterlegt, welche dann bei Bedarf an das Gerät mit dem entsprechenden Gerätetyp und der entsprechenden topologischen Position übermittelt werden. Nach der Übermittlung der entsprechenden Konfigurationsdaten konfiguriert sich das jeweilige Gerät schließlich basierend auf diesen Daten.

Erfindungsgemäß kontaktiert ein jeweiliges zu konfigurierendes Gerät selbsttätig, z.B. nach der Anbindung an das Kommunikationsnetz, die Datenbank, wobei es sich anschließend die seinem Gerätetyp und seiner ermittelten topologischen Position entsprechenden Konfigurationsdaten aus der Datenbank lädt. Dabei wird ohne aktive Beteiligung der Datenbank die Übermittlung der Konfigurationsdaten durchgeführt. Auf diese Weise kann sehr schnell ein neu an das Netz angebundenes Gerät konfiguriert werden.

Die Datenbank kann sowohl eine zentrale Datenbank in dem Kommunikationsnetz als auch eine auf die einzelnen Geräte verteilte Datenbank sein. Die Verwaltung der Datenbank wird dabei vorzugsweise von einer Überwachungsstation im Kommunikationsnetz übernommen. Eine solche Überwachungsstation kann z.B. eine sog. Engineering-Station bei der Verwendung des Verfahrens für ein Kommunikationsnetz einer Automatisierungsanlage sein.

Das erfindungsgemäße Verfahren zeichnet sich dadurch aus, dass einzelne Geräte automatisch ohne manuellen Eingriff selbst dann konfiguriert werden können, wenn in dem Kommunikationsnetz mehrere Geräte vom gleichen Gerätetyp vorhanden sind. Dies wird dadurch ermöglicht, dass bei der Konfiguration neben dem Gerät auch die topologische Position des Geräts im Kommunikationsnetz berücksichtigt wird, wobei diese topologische Position wiederum mit einem entsprechenden Installationsort des Geräts verknüpft ist. Auf diese Weise werden Fehlkonfigurationen von mehreren baugleichen Gerätetypen mit unterschiedlichen Installationsorten im Netz vermieden.

Wie bereits oben erwähnt, ist der Begriff der topologischen Position weit zu verstehen. In einer bevorzugten Ausführungsform wird die topologische Position des jeweiligen Geräts über die im Kommunikationsnetz vorhandenen direkten Verbindungen des jeweiligen Geräts zu anderen Geräten beschrieben, insbesondere basierend auf Adressen (d.h. netzweit eindeutigen Bezeichnern) der direkt verbundenen Geräte, wie z.B. MAC-Adressen und/oder IP-Adressen und/oder Profinet-Ids, und den zur direkten Verbindung genutzten Ports dieser Geräte.

Verfahren zur Erkennung einer entsprechenden Netztopologie und der damit verbundenen topologischen Positionen der einzelnen Geräte sind aus dem Stand der Technik bekannt. In einer besonders bevorzugten Ausführungsform wird zur Topologieerkennung das LLDP-Protokoll (LLDP = Link Layer Discovery Protocol) verwendet. Gemäß diesem Protokoll tauschen benachbarte Geräte Informationen betreffend ihre Geräteidentifikation und ihren Gerätetyp sowie die zur Verbindung genutzten Ports miteinander aus. Dabei werden in jedem Gerät Informationen zu den Nachbargeräten in einer MIB-Datenbank (MIB = Management Information Base) abgelegt. Zum Zugriff auf diese Daten kann das ebenfalls aus dem Stand der Technik bekannte SNMP-Protokoll (SNMP = Simple Network Management Protocol) genutzt werden. Dieses Protokoll kann generell im Rahmen der Übermittlung von Konfigurationsdaten zum Einsatz kommen. Das heißt, das SNMP-Protokoll kann in dem der Daten-übermittlung vorgeschalteten Schritt des Auslesens entsprechender Gerätetypen bzw. topologischer Positionen der Geräte verwendet werden und alternativ oder zusätzlich auch zur eigentlichen Übertragung der Konfigurationsdaten an die zu konfigurierenden Geräte genutzt werden.

In einer weiteren Variante des erfindungsgemäßen Verfahrens erfolgt wiederum die selbsttätige Kontaktierung der Datenbank durch das Gerät, wobei das Gerät im Rahmen der Kontaktierung der Datenbank seinen Gerätetyp und seine ermittelte topologische Position der Datenbank mitteilt. Daraufhin sendet jedoch die Datenbank die entsprechenden Konfigurationsdaten an das jeweilige Gerät, d.h. die Datenbank übernimmt auch eine aktive Funktion bei der Übertragung der Konfigurationsdaten.

In einer weiteren Variante des erfindungsgemäßen Verfahrens wird die Übermittlung der Konfigurationsdaten ausschließlich durch die Datenbank initiiert und durchgeführt. Dabei erkennt die Datenbank das Vorhandensein eines jeweiligen zu konfigurierenden Geräts und sendet selbsttätig die seinem (ermittelten) Gerätetyp und seiner ermittelten topologischen Position entsprechenden Konfigurationsdaten an das erkannte Gerät. Im Rahmen der Erkennung des Geräts kann die Datenbank auch auf den Gerätetyp und die topologische Position des Geräts zugreifen. Die soeben beschriebenen zwei Varianten zur Übermittlung der Konfigurationsdaten können parallel im Kommunikationsnetz zu der Variante gemäß Anspruch 1 zum Einsatz kommen.

In einer besonders bevorzugten Ausführungsform wird das erfindungsgemäße Verfahren für ein auf Ethernet basierendes in dustrielles Kommunikationsnetz (auch Industrial Ethernet genannt) und insbesondere für ein auf Profinet basierendes Kommunikationsnetz eingesetzt. Industrial Ethernet und Profinet wurden speziell für die Vernetzung von Geräten in Automatisierungssystemen entwickelt und sind in entsprechenden Standards spezifiziert. Insbesondere ist der Profinet-Standard in den Normen IEC 61158 und IEC 61784 festgelegt.

Ein bevorzugter Anwendungsfall der Erfindung ist deren Einsatz in einem Kommunikationsnetz für ein Automatisierungssystem, insbesondere für eine industrielle Automatisierungsanlage bzw. gegebenenfalls auch für ein anderes Automatisierungssystem, wie z.B. eine Anlage zur Gebäudeautomatisierung. Das oder die zu konfigurierenden Geräte umfassen dabei insbesondere ein oder mehrere Ethernet-Switches bzw. entsprechende Feldgeräte, welche Funktionen im Rahmen des automatisierten Verfahrens durchführen (z.B. Motoren, Messgeräte, Ventile und dergleichen). Vorzugsweise ist dabei in zumindest einem Teil der Feldgeräte jeweils ein Ethernet-Switch integriert.

Neben dem oben beschriebenen Verfahren betrifft die Erfindung ferner ein Ethernet-basiertes Kommunikationsnetz aus einer Vielzahl von Ethernet-fähigen Geräten, wobei das Kommunikationsnetz Mittel umfasst, welche die Durchführung des erfindungsgemäßen Verfahrens bzw. einer oder mehrerer bevorzugter Varianten des erfindungsgemäßen Verfahrens ermöglichen.

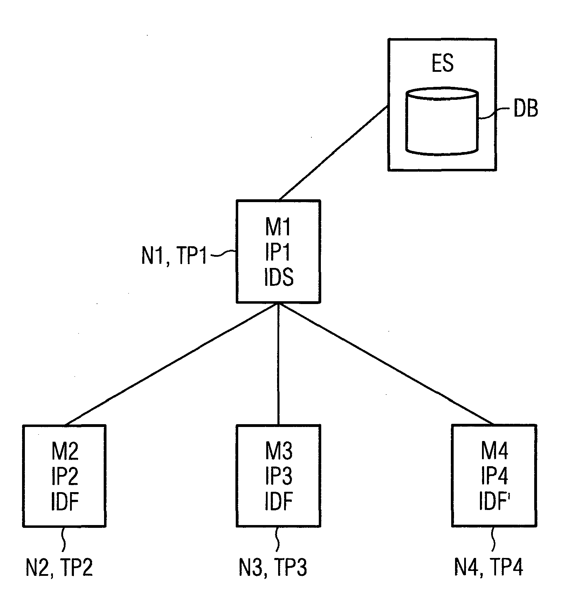

Ein Ausführungsbeispiel der Erfindung wird nachfolgend anhand der beigefügten Fig. 1 beschrieben. Diese Figur zeigt eine schematische Darstellung eines Kommunikationsnetzes, in dem eine Variante des erfindungsgemäßen Verfahrens ausgeführt wird.

Das in Fig. 1 gezeigte Kommunikationsnetz betrifft die Vernetzung von Komponenten einer industriellen Automatisierungsanlage, welche z.B. zur Fertigungsautomatisierung bzw. Prozessautomatisierung eingesetzt werden kann. Die Erfindung ist jedoch nicht auf Kommunikationsnetze für industrielle Automatisierungsanlagen beschränkt, sondern kann auch in anderen Anwendungsgebieten, wie z.B. Anlagen zur Gebäudeautomatisierung, verwendet werden.

Eine industrielle Automatisierungsanlage umfasst eine Vielzahl von Komponenten zur Durchführung eines automatisierten Verfahrens. Insbesondere sind in der Anlage viele verschiedene Feldgeräte, wie z.B. Antriebe, Sensoren, Ventile und dergleichen, vorgesehen, die über ein Ethernet-basiertes Kommunikationsnetz, eventuell unter Zwischenschaltung von Ethernet-Switches, miteinander vernetzt sind. Feldgeräte mit mehreren Ports können auch direkt verbunden werden. In diesem Fall ist der Ethernet-Switch im Gerät integriert. Ferner beiinhaltet die Anlage speicherprogrammierte Steuerungen bzw. PC-basierte Steuerungen, welche ebenfalls über das Ethernet-basierte Kommunikationsnetz mit den Switches bzw. den Feldgeräten kommunizieren. Darüber hinaus ist in der Regel eine Überwachungsstation in der Form einer Engineering-Station vorgesehen, in welcher die entsprechenden Engineering-Daten betreffend den Aufbau der Automatisierungsanlage verwaltet werden. Diese Daten umfassen unter anderem die entsprechenden Konfigurationsdaten für die einzelnen Geräte der Automatisierungsanlage. Hauptaufgabe der Engineering-Station ist die Unterstützung der Inbetriebnahme und Diagnose der über Ethernet vernetzten Geräte der Automatisierungsanlage.

Fig. 1 zeigt schematisch lediglich einen kleinen Ausschnitt einer Automatisierungsanlage mit entsprechenden Geräten N1, N2, N3 und N4, die über Kommunikationsleitungen miteinander verbunden sind. Die Kommunikation zwischen den Geräten beruht dabei vorzugsweise auf dem Profinet-Protokoll, welches das Ethernet-Protokoll verwendet. Bei dem Gerät N1 handelt es sich um einen Ethernet-Switch, an dessen Ports drei Feldgeräte N2, N3 und N4 angeschlossen sind. Bei den Feldgeräten N2 und N3 handelt es sich um Feldgeräte des gleichen Gerätetyps, beispielsweise vom gleichen Motortyp, wohingegen das Feldgerät N4 ein sich davon unterscheidendes Gerät eines anderen Gerätetyps ist. In Fig. 1 ist ferner eine Engineering-Station ES der Automatisierungsanlage angedeutet, die an dem Ethernet-Switch N1 über eine entsprechende Kommunikationsleitung angeschlossen ist und eine Datenbank DB beinhaltet, in der entsprechende Konfigurationsdaten CO für die einzelnen Geräte hinterlegt sind. Gemäß Fig. 1 ist die Datenbank DB als Bestandteil des Engineering-Systems ES dargestellt. Es besteht jedoch auch die Möglichkeit, dass die Datenbank eine auf die einzelnen Geräte verteilte Datenbank ist, die über die Engineering-Station ES verwaltet wird.

Jedem einzelnen Gerät der Fig. 1 ist eine entsprechende MAC-Adresse zugeordnet, welche für den Ethernet-Switch N1 mit M1 und für die Feldgeräte N2, N3 bzw. N4 mit M2, M3 bzw. M4 bezeichnet ist. Bei Inbetriebnahme des Kommunikationsnetzes werden über geeignete Mechanismen, insbesondere über DHCP oder Autokonfiguration, auch IP-Adressen an die Geräte vergeben. Gemäß Fig. 1 sind dabei den Geräten N1, N2, N3 und N4 die entsprechenden IP-Adressen IP1, IP2, IP3 und IP4 zugeordnet. Darüber hinaus sind in den einzelnen Geräten auslesbare Gerätetyp-Beschreibungen in einem nicht-flüchtigen Speicher hinterlegt, wie z.B. Geräte-ID, Name, Hersteller, Versionsnummer und dergleichen. In Fig. 1 ist dabei die Gerätetyp-Beschreibung für den Ethernet-Switch N1 mit IDS bezeichnet, die identischen Gerätetyp-Beschreibungen für die Feldgeräte N2 und N3 mit IDF und die Gerätetyp-Beschreibung für das Feldgerät N4 mit IDF'.

Im Rahmen der Topologie des in Fig. 1 gezeigten Netzes hat jedes einzelne Gerät eine unterschiedliche topologische Position, die für die einzelnen Geräte N1, N2, N3 bzw. N4 mit TP1, TP2, TP3 bzw. TP4 bezeichnet ist. Ein wesentlicher Aspekt des erfindungsgemäßen Verfahrens besteht darin, dass diese topologische Position in der Form einer entsprechenden topologischen Information in dem Kommunikationsnetz ermittelt wird und dann bei der Konfiguration der einzelnen Geräte berücksichtigt wird.

In der Ausführungsform der Fig. 1 wird das aus dem Stand der Technik bekannte LLDP-Protokoll als ein Verfahren zur Topologieerkennung verwendet. Gemäß diesem Protokoll tauschen benachbarte Geräte Informationen betreffend ihre Geräteidentifikation bzw. ihren Gerätetyp aus. Die ausgetauschten Informationen werden in dem jeweiligen Gerät in einer sog. MIB-Datenbank (MIB = Management Information Base) hinterlegt. Die Einträge der Datenbank enthalten dabei für ein jeweiliges Gerät dessen Nachbargeräte mit entsprechender Typidentifikation sowie der Portnummer, an dem das jeweilige Nachbargerät angeschlossen ist. Über die Portnummern werden somit die entsprechenden Verbindungen zwischen benachbarten Geräten und damit die topologischen Positionen der Geräte im Kommunikationsnetz beschrieben. Diese Informationen werden dann dazu genutzt, um aus der Datenbank DB stammende Konfigurationsdaten auf den einzelnen Geräten nicht nur in Abhängigkeit von dem Gerätetyp, sondern auch in Abhängigkeit von der topologischen Position des Geräts im Netz zu hinterlegen. Dabei sind in der Datenbank DB eine Vielzahl von verschiedenen Konfigurationen sowohl für verschiedene Gerätetypen als auch verschiedene topologische Positionen der entsprechenden Gerätetypen hinterlegt. Je nach Gerätetyp und topologischer Position wird dann die entsprechende Konfigurationsinformation auf dem zu konfigurierenden Gerät hinterlegt.

Erfindungsgemäß wird somit berücksichtigt, dass der gleiche Gerätetyp für unterschiedliche Installationsorte unterschiedlich konfiguriert sein kann. Beispielsweise können sich Antriebsrichtungen von Motoren je nach Anordnung in der Automatisierungsanlage unterscheiden. Über eine automatische Topologieerkennung wird die entsprechende topologische Information gesammelt und in geeigneter Weise bei der Konfiguration einbezogen. Folglich ist es möglich, dass die Geräte N2 und N3 des Netzes der Fig. 1 trotz ihrer Baugleichheit aufgrund ihrer unterschiedlichen topologischen Position verschieden konfiguriert werden.

Im Folgenden werden konkrete Realisierungen des erfindungsgemäßen Verfahrens am Beispiel eines Neuanschlusses eines Geräts, beispielsweise des Geräts N2, an das Kommunikationsnetz bzw. die Automatisierungsanlage erläutert. Nach Anschluss des Geräts an das Netz bezieht das Gerät z.B. über das bereits oben erwähnte LLDP-Protokoll Informationen über den Zugangspunkt zum Netz. Ebenso wird das Gerät von umgebenden Nachbargeräten erkannt, so dass Informationen über seine topologische Position bzw. seinen Installationsort im Netz gewonnen werden. Diese Informationen werden zusammen mit Gerätedaten umfassend die Typidentifikation des Geräts mit der Datenbank DB der Engineering-Station ES ausgetauscht, woraufhin dann die geeigneten Konfigurationsdaten auf dem Gerät hinterlegt werden und das Gerät mit diesen Konfigurationsdaten konfiguriert wird. Da eine gültige IP-Adresse benötigt wird, um mit der Datenbank DB zu kommunizieren, wird nach der Topologieerkennung zum Beispiel ein vorläufige IP-Adresse vergeben bzw. ermittelt, welche nach dem Datenbankzugriff durch eine dort hinterlegte IP-Adresse ausgetauscht wird, sofern in den Konfigurationsdaten für das entsprechende Gerät eine bestimmte IP-Adresse vorgesehen ist. In diesem Fall stellt die IP-Adresse einen Teil der ortsabhängig festgelegten Konfigurationsdaten dar. Falls die Konfigurationsdaten keine bestimmte IP-Adresse vorsehen, kann diese über Verfahren des Standes der Technik - z.B. DHCP oder Autokonfiguration - zu Beginn festgelegt werden. In Fig. 1 sind die entsprechenden IP-Adressen der Geräte N1, N2, N3 bzw. N4 mit IP1, IP2, IP3 bzw. IP4 bezeichnet.

Für die Hinterlegung der Konfigurationsdaten kann eine der folgenden drei Varianten verwendet werden, wobei die erste Variante die Erfindung betrifft. Gemäß einer ersten Variante kontaktiert das zu konfigurierende Gerät selbsttätig die Datenbank DB und holt sich auf Basis der zuvor gewonnenen topologischen Informationen und seiner Gerätetyp-Information die entsprechende Konfiguration, mit der es sich anschließend konfiguriert. In einer zweiten Variante meldet sich das zu konfigurierende Gerät lediglich an der Datenbank an und teilt ihr seine topologische Position und seinen Gerätetyp mit. Der Konfigurationsschritt wird dann von der Datenbank durchgeführt, wobei hierfür z.B. das SNMP-Protokoll eingesetzt werden kann. In einer dritten Variante erkennt die Datenbank DB von alleine das Vorhandensein eines neu angeschlossenen Geräts, z.B. auf Basis von veränderten LLDP-Informationen in entsprechenden MIB-Datenbanken der umgebenden Geräte. Anschließend bezieht die Datenbank aus dem neu angeschlossenen Gerät bzw. den umgebenden Geräten die entsprechenden topologischen Informationen sowie die Gerätetyp-Information des neu angeschlossenen Geräts. Basierend auf diesen Informationen wird dann die geeignete Konfiguration von der Datenbank ausgewählt und an das Gerät gesendet, welches anschließend mit den empfangenen Konfigurationsdaten konfiguriert wird.

Die im Vorangegangenen beschriebenen Ausführungsbeispiele des erfindungsgemäßen Verfahrens weisen eine Reihe von Vorteilen auf. Insbesondere wird eine automatische kontextabhängige Konfiguration einzelner Geräte unter Benutzung sowohl des Gerätetyps als auch der topologischen Position des Geräts ermöglicht. Im Falle eines Austauschs eines Geräts gegen ein Gerät des gleichen bzw. eines kompatiblen Typs ist dabei eine automatische Konfiguration des Geräts möglich, denn das ein gebaute Gerät kann ohne manuellen Zwischenschritt unter Berücksichtigung seiner automatisch ermittelten topologischen Position der richtigen Geräteinstanz zugeordnet werden, so dass die richtigen Konfigurationsdaten auf dem Gerät hinterlegt werden. Eine Fehlkonfiguration, z.B. durch die automatische Konfiguration eines an anderer Stelle eingebauten gleichen oder eines an anderer Stelle wieder eingebauten Geräts ist durch die Berücksichtigung dessen topologischer Position ausgeschlossen. Im Falle der Erstinbetriebnahme von neu an das Kommunikationsnetz angeschlossenen Geräten entfällt der manuelle Aufwand für die Zuordnung von baugleichen Geräten zu den jeweiligen, in der Engineering-Phase der Anlage festgelegten Geräteinstanzen, da diese auf Basis der in der Engineering-Phase definierten Netztopologie automatisch identifiziert werden können. Dabei kann das Verfahren auch dazu beitragen, Unterschiede zwischen einer geplanten und tatsächlichen Topologie, welche z.B. durch Installationsfehler entstehen können, zu entdecken.

## Patentansprüche

1. Verfahren zur Konfiguration eines oder mehrerer Geräte (N1, N2, N3, N4) in einem Ethernet-basierten Kommunikationsnetz aus einer Vielzahl von Ethernet-fähigen Geräten (N1, N2, N3, N4), bei dem:
- für ein jeweiliges zu konfigurierendes Gerät (N1, N2, N3, N4), welches einem Gerätetyp (IDS, IDF, IDF') zugeordnet ist, dessen topologische Position (TP1, TP2, TP3, TP4) in dem Kommunikationsnetz ermittelt wird;
- an das jeweilige Gerät (N1, N2, N3, N4) seinem Gerätetyp (IDS, IDF, IDF') und seiner ermittelten topologischen Position (TP1, TP2, TP3, TP4) entsprechende Konfigurationsdaten (CO) aus einer Datenbank (DB) übermittelt werden, welche eine Vielzahl von Konfigurationsdaten (CO) für einen oder mehrere Gerätetypen (IDS, IDF, IDF') und verschiedene topologische Positionen (TP1, TP2, TP3, TP4) des oder der Gerätetypen (IDS, IDF, IDF') enthält, **dadurch gekennzeichnet dass** ein jeweiliges zu konfigurierendes Gerät (N1, N2, N3, N4) selbsttätig die Datenbank (DB) kontaktiert und sich anschließend die seinem Gerätetyp (IDS, IDF, IDF') und seiner ermittelten topologischen Position (TP1, TP2, TP3, TP4) entsprechenden Konfigurationsdaten (CO) aus der Datenbank (DB) herunterlädt;
- das jeweilige Gerät (N1, N2, N3, N4) basierend auf den übermittelten Konfigurationsdaten (CO) konfiguriert wird.

2. Verfahren nach Anspruch 1, bei dem die Datenbank (DB) von einer Überwachungsstation (ES) im Kommunikationsnetz verwaltet wird.

3. Verfahren nach Anspruch 1 oder 2, bei dem die topologische Position (TP1, TP2, TP3, TP4) des jeweiligen Geräts (N1, N2, N3, N4) die im Kommunikationsnetz vorhandenen direkten Verbindungen des jeweiligen Geräts (N1, N2, N3, N4) zu anderen Geräten (N1, N2, N3, N4) beschreibt, insbesondere basierend auf Adressen der direkt verbundenen Geräte (N1, N2, N3, N4) und den zur direkten Verbindung genutzten Ports dieser Geräte (N1, N2, N3, N4).

4. Verfahren nach einem der vorhergehenden Ansprüche, bei dem die topologische Position (TP1, TP2, TP3, TP4) des jeweiligen Geräts (N1, N2, N3, N4) über das Link Layer Discovery Protocol LLDP ermittelt wird.

5. Verfahren nach einem der vorhergehenden Ansprüche, bei dem im Rahmen der Übermittlung der Konfigurationsdaten (CO) das Simple Network Management Protocol SNMP eingesetzt wird.

6. Verfahren nach einem der vorhergehenden Ansprüche, bei dem ein jeweiliges zu konfigurierendes Gerät (N1, N2, N3, N4) selbsttätig die Datenbank (DB) kontaktiert, wobei es im Rahmen der Kontaktierung der Datenbank (DB) seinen Gerätetyp (IDS, IDF, IDF') und seine ermittelte topologische Position (TP1, TP2, TP3, TP4) der Datenbank (DB) mitteilt, woraufhin die Datenbank (DB) die entsprechenden Konfigurationsdaten (CO) an das jeweilige Gerät (N2, N2, N4) sendet.

7. Verfahren nach einem der vorhergehenden Ansprüche, bei dem die Datenbank (DB) das Vorhandensein eines jeweiligen zu konfigurierenden Geräts (N1, N2, N3, N4) erkennt und selbsttätig die seinem Gerätetyp und seiner ermittelten topologischen Position entsprechenden Konfigurationsdaten (CO) an das erkannte Gerät (N1, N2, N3, N4) sendet.

8. Verfahren nach einem der vorhergehenden Ansprüche, bei dem das Kommunikationsnetz auf Industrial Ethernet und insbesondere auf Profinet basiert.

9. Verfahren nach einem der vorhergehenden Ansprüche, bei dem das Verfahren in einem Kommunikationsnetz eines Automatisierungssystems, insbesondere einer industriellen Automatisierungsanlage und/oder einer Anlage zur Gebäudeautomatisierung, eingesetzt wird.

10. Verfahren nach Anspruch 9, bei dem das oder die zu konfigurierenden Geräte (N1, N2, N3, N4) einen oder mehrere Ethernet-Switches und/oder ein oder mehrere Feldgeräte umfassen, wobei vorzugsweise zumindest ein Teil der Feldgeräte einen integrierten Ethernet-Switch enthalten.

11. Ethernet-basiertes Kommunikationsnetz aus einer Vielzahl von Ethernet-fähigen Geräten (N1, N2, N3, N4), wobei das Kommunikationsnetz Mittel zur Durchführung eines Verfahrens nach einem der vorhergehenden Ansprüche umfasst.

## Claims

1. Method for configuring one or more devices (N1, N2, N3, N4) in an Ethernet-based communication network comprising a multiplicity of Ethernet-capable devices (N1, N2, N3, N4), wherein:
- for a particular device (N1, N2, N3, N4) which is to be configured and which is assigned to a device type (IDS, IDF, IDF'), the topological position (TP1, TP2, TP3, TP4) of said device in the communication network is determined;
- configuration data (CO) corresponding to its device type (IDS, IDF, IDF') and its determined topological position (TP1, TP2, TP3, TP4) is transmitted to the respective device (N1, N2, N3, N4) from a database (DB) which contains a multiplicity of configuration data (CO) for one or more device types (IDS, IDF, IDF') and different topological positions (TP1, TP2, TP3, TP4) of the device type or types (IDS, IDF, IDF'), **characterised in that** a respective device (N1, N2, N3, N4) requiring to be configured contacts the database (DB) automatically and subsequently independently downloads the configuration data (CO) corresponding to its device type (IDS, IDF, IDF') and its determined topological position (TP1, TP2, TP3, TP4) from the database (DB);
- the respective device (N1, N2, N3, N4) is configured based on the transmitted configuration data (CO).

2. Method according to claim 1, wherein the database (DB) is administered by a monitoring station (ES) in the communication network.

3. Method according to claim 1 or 2, wherein the topological position (TP1, TP2, TP3, TP4) of the respective device (N1, N2, N3, N4) describes the direct connections that are present in the communication network between the respective device (N1, N2, N3, N4) and other devices (N1, N2, N3, N4), in particular based on addresses of the directly connected devices (N1, N2, N3, N4) and the ports of said devices (N1, N2, N3, N4) used for the direct connection.

4. Method according to one of the preceding claims, wherein the topological position (TP1, TP2, TP3, TP4) of the respective device (N1, N2, N3, N4) is determined via the Link Layer Discovery Protocol LLDP.

5. Method according to one of the preceding claims, wherein the Simple Network Management Protocol SNMP is used in the course of transmitting the configuration data (CO).

6. Method according to one of the preceding claims, wherein a respective device (N1, N2, N3, N4) requiring to be configured contacts the database (DB) automatically, said device communicating its device type (IDS, IDF, IDF') and its determined topological position (TP1, TP2, TP3, TP4) to the database (DB) in the course of contacting the database (DB), whereupon the database (DB) sends the corresponding configuration data (CO) to the respective device (N2, N2, N4).

7. Method according to one of the preceding claims, wherein the database (DB) detects the presence of a respective device (N1, N2, N3, N4) requiring to be configured and automatically sends the configuration data (CO) corresponding to its device type and its determined topological position to the detected device (N1, N2, N3, N4).

8. Method according to one of the preceding claims, wherein the communication network is based on Industrial Ethernet and in particular on Profinet.

9. Method according to one of the preceding claims, wherein the method is used in a communication network of an automation system, in particular an industrial automation system and/or a building automation system.

10. Method according to claim 9, wherein the device or devices (N1, N2, N3, N4) requiring to be configured comprises or comprise one or more Ethernet switches and/or one or more field devices, with preferably at least some of the field devices containing an integrated Ethernet switch.

11. Ethernet-based communication network comprising a multiplicity of Ethernet-capable devices (N1, N2, N3, N4), wherein the communication network comprises means for carrying out a method according to one of the preceding claims.

## Revendications

1. Procédé pour configurer un ou plusieurs appareils (N1, N2, N3, N4) dans un réseau de communication basé sur l'Ethernet et constitué d'une pluralité d'appareils (N1, N2, N3, N4) aptes à l'Ethernet, selon lequel :
- étant donné un appareil respectif à configurer (N1, N2, N3, N4) qui est associé à un type d'appareil (IDS, IDF, IDF'), on détermine la position topologique (TP1, TP2, TP3, TP4) dudit appareil dans le réseau de communication ;
- à l'appareil respectif (N1, N2, N3, N4) sont transmises des données de configuration (CO), correspondant à son type d'appareil (IDS, IDF, IDF') et à sa position topologique déterminée (TP1, TP2, TP3, TP4), à partir d'une base de données (DB) qui contient une pluralité de données de configuration (CO) pour un ou plusieurs types d'appareils (IDS, IDF, IDF') et différentes positions topologiques (TP1, TP2, TP3, TP4) du ou des types d'appareil (IDS, IDF, IDF'), **caractérisé en ce qu'**un appareil respectif à configurer (N1, N2, N3, N4) contacte automatiquement la base de données (DB) et se télécharge ensuite, à partir de la base de données (DB), les données de configuration (CO) correspondant à son type d'appareil (IDS, IDF, IDF') et à sa position topologique déterminée (TP1, TP2, TP3, TP4), et **en ce que**
- l'appareil respectif (N1, N2, N3, N4) est configuré sur la base des données de configuration transmises (CO).

2. Procédé selon la revendication 1, selon lequel la base de données (DB) est gérée par une station de surveillance (ES) dans le réseau de communication.

3. Procédé selon la revendication 1 ou 2, selon lequel la position topologique (TP1, TP2, TP3, TP4) de l'appareil respectif (N1, N2, N3, N4) décrit les liaisons de l'appareil respectif (N1, N2, N3, N4) existantes dans le réseau de communication vers d'autres appareils (N1, N2, N3, N4), en particulier sur la base d'adresses des appareils directement reliés (N1, N2, N3, N4) et des ports de ces appareils (N1, N2, N3, N4) utilisés aux fins de la liaison directe.

4. Procédé selon l'une des revendications précédentes, selon lequel la position topologique (TP1, TP2, TP3, TP4) de l'appareil respectif (N1, N2, N3, N4) est déterminée via le protocole LLDP (Link Layer Discovery Protocol).

5. Procédé selon l'une des revendications précédentes, selon lequel le protocole SNMP (Simple Network Management Protocol) est utilisé dans le cadre de la transmission des données de configuration (CO).

6. Procédé selon l'une des revendications précédentes, selon lequel un appareil respectif à configurer (N1, N2, N3, N4) contacte automatiquement la base de données (DB) tout en communiquant à la base de données (DB), dans le cadre de la connexion à celle-ci, son type d'appareil (IDS, IDF, IDF') et sa position topologique déterminée (TP1, TP2, TP3, TP4), suite à quoi la base de données (DB) envoie les données de configuration correspondantes (CO) à l'appareil respectif (N2, N2, N4).

7. Procédé selon l'une des revendications précédentes, selon lequel la base de données (DB) reconnaît la présence d'un appareil respectif à configurer (N1, N2, N3, N4) et envoie automatiquement à l'appareil reconnu (N1, N2, N3, N4) les données de configuration (CO) qui correspondent à son type d'appareil et à sa position topologique déterminée.

8. Procédé selon l'une des revendications précédentes, selon lequel le procédé se base sur Industrial Ethernet, et plus particulièrement sur Profinet.

9. Procédé selon l'une des revendications précédentes, selon lequel le procédé est utilisé dans un réseau de communication d'un système d'automatisation, et plus particulièrement une installation d'automatisation industrielle et/ou une installation d'automatisation des bâtiments.

10. Procédé selon la revendication 9, selon lequel le ou les appareils à configurer (N1, N2, N3, N4) comprennent un ou plusieurs commutateurs Ethernet et/ou un ou plusieurs appareils de terrain, de préférence au moins une partie des appareils de terrain contenant un commutateur Ethernet intégré.

11. Réseau de communication basé sur l'Ethernet et constitué d'une pluralité d'appareils (N1, N2, N3, N4) aptes à l'Ethernet, le réseau de communication comprenant des moyens permettant d'exécuter un procédé selon l'une des revendications précédentes.
